**Europäisches Patentamt**

**European Patent Office**

**Office européen des brevets**

(19)

(11) Veröffentlichungsnummer: **0 102 490**
**B1**

(12) **EUROPÄISCHE PATENTSCHRIFT**

(45) Veröffentlichungstag der Patentschrift:
18.03.87

(51) Int. Cl.⁴: **G 01 N 9/00**

(21) Anmeldenummer: **83106994.3**

(22) Anmeldetag: **16.07.83**

(54) **Dichtemesser für Gase.**

(30) Priorität: **04.08.82 DE 3229050**

(43) Veröffentlichungstag der Anmeldung:
**14.03.84 Patentblatt 84/11**

(45) Bekanntmachung des Hinweises auf die Patenterteilung:
**18.03.87 Patentblatt 87/12**

(84) Benannte Vertragsstaaten:
**AT CH FR GB LI NL**

(56) Entgegenhaltungen:
**DE-A-1 498 602**
**DE-A-1 598 155**
**DE-A-2 555 112**
**US-A-3 420 092**

(73) Patentinhaber: **BOPP & REUTHER GMBH, Carl-Reuther- Strasse 1, D-6800 Mannheim 31 (DE)**

(72) Erfinder: **Böhm, Jürger, Dr.- Ing.,
Krautheimerstrasse 11, D-6800 Mannheim-Wallstadt (DE)**

LIBER, STOCKHOLM 1987

## Beschreibung

Die Erfindung geht aus von einem Dichtemesser für Gase mit einer dem Gas ausgesetzten Stimmgabel als Schwingkörper, die als Teil eines phasengekoppelten elektromagnetischen Schwingungssystems einerseits in einer ihrer Eigenfrequenzen angeregt und andererseits in dieser Eigenfrequenz, die sich mit unterschiedlicher Dichte der Gase ändert, erfaßt wird, wobei die beiden Enden der Stimmgabelzinken einen die Oberfläche vergrößernden und dadurch die Wechselwirkung der Massenkräfte erhöhenden Prallkörper tragen. Durch einen solchen Prallkörper wird das von der schwingenden Stimmgabel in Bewegung gesetzte Gasvolumen vergrößert, so daß die Meßwertauflösung verbessert wird.

Ein solcher Dichtemesser ist aus der DE-A 1 598 155 bekannt, bei dem als Prallkörper eine kreiszylindrische Halbschale an jedem Ende der Gabelzinken der Stimmgabel vorgesehen ist. Diese kreiszylindrischen Halbschalen haben jedoch je nach Schwingungsrichtung unterschiedliche Strömungswiderstandsbeiwerte $c_w$, und zwar ist der Widerstandsbeiwert bei der Anströmung der konkaven Seite etwa 4 mal so groß als bei der Anströmung der konvexen Seiten der Halbschalen. Beim Schwingen der an den Enden der Gabelzinken der Stimmgabel sitzenden Halbschalen treten bei der Umströmung der Schalenränder Turbulenzen auf, die durch die gegenseitige Beeinflussung der eng nebeneinander liegenden Zylinderhalbschalen eine erhöhte Dämpfung der Stimmgabelschwingungen verursachen. Diese durch die auftretenden Turbulenzen an den Rändern der Halbzylinderschalen verursachte Dämpfung der Stimmgabelschwingungen ist hierbei infolge der gegenseitigen Beeinflussung der beiden Halbschalen an den eng nebeneinander liegenden Schalenrändern in Abhängigkeit von der Viskosität des zu messenden Gases unterschiedlich, so daß mit dem bekannten Dichtemesser von der Viskosität des Gases abhängige Meßwerte erzielt werden.

Durch die auftretenden Turbulenzen zwischen den Schalenrändern wird auch ein erhöhter Energieverbrauch verursacht und außerdem haben die unterschiedlichen Strömungswiderstandsbeiwerte der Zylinderhalbschalen zur Folge, daß sich zwar ein Periodischer aber nicht mehr harmonischer Schwingungsverlauf ergibt.

Aus der Figur 3 der US-A- 3 420 092 ist außerdem ein Stimmgabel-Dichtemesser bekannt geworden, bei dem an den Enden der Gabelzinken der Stimmgabel ebene Prallplatten vorgesehen sind. Diese ebenen Prallplatten besitzen jedoch, wenn sie zur Erzielung eindeutiger Schwingungsverhältnisse steif genug ausgebildet sind, eine zu große schwingende Masse, die den Meßeffekt wesentlich verkleinert, und außerdem treten auch hier an den Plattenrändern beim Schwingen der Stimmgabel Turbulenzen auf, die eine in Abhängigkeit von der Viskosität des zu messenden Gases unterschiedliche Dämpfung der beiden zusammenwirkenden Platten der Stimmgabelzinken auslösen.

Aufgabe der vorliegenden Erfindung ist es, bei einem Stimmgabel-Dichtemesser die Abhängigkeit des Meßwertes von der Viskosität des Meßgases zu verringern und dadurch die Meßgenauigkeit des Dichtemessers zu erhöhen.

Die Lösung dieser Aufgabe wird ausgehend von eingangs dargelegten Dichtmesser entsprechend dem kennzeichnenden Merkmal des Anspruchs 1 darin gesehen, daß auf die beiden Enden der Gabelzinken der Stimmgabel jeweils ein axial zu den Gabelzinken verlaufendes und au beiden Endabschitten offenes dünnwandiges Rohr mit einem Endabschnitt aufgesetzt und mit dem zugehörigen Gabelzinken durch Schweißen, Löten oder dergl. fest verbunden ist.

Durch die Anordnung solcher dünnwandigen Rohre an den Enden der Gabelzinken der Stimmgabel tritt infolge des in beiden Bewegungsrichtungen sehr kleinen Strömungswiderstandsbeiwertes der beiden Zylinder beim Schwingen der beiden Rohre gegeneinander keine scharfe Umlenkung in der Strömung des Meßgases mehr auf. Vielmehr wird das Gas in dem Spalt zwischen den beiden gegeneinander schwingenden Rohrmantelabschnitten sanft nach außen umgelenkt, wodurch eine Turbulenzbildung zwischen den beiden Rohrabschnitten weitgehend vermieden und die bei Stimmgabel-Dichtemessern bisher durch die Turbulenz aufgetretene viskositätsabhängige unterschiedliche Schwingungsdämpfung wesentlich verringert wird. Durch diese Verringerung der Viskositätsabhängigkeit des Meßwertes wird die Meßgenauigkeit des Stimmgabel-Dichtemessers erhöht und durch den Wegfall der Turbulenz der Energieverbrauch wesentlich verringert.

Aus der Druckschift DE-A- 2 555 112 ist noch ein Schwingbalken-Dichtegeber bekannt geworden, bei dem an den beiden Enden des Schwingbalkens ein beliebig geformtes Körbchen vorgesehen ist. Im Ausführungsbeispiel dieser Druckschrift sind zwar als Körbchen Rohrabschnitte gezeigt, jedoch können diese Rohrabschnitte jede beliebige andere Form haben und sind nicht vorgesehen worden, um Turbulenzen zu unterdrücken und die Viskositätsabhängigkeit des Meßwertes zu verringern. Mit einem Stimmgabel-Dichtemesser ist dieser bekannte Schwingbalken-Dichtegeber deshalb nicht vergleichbar.

Eine zweckmäßige Befestigungsmöglichkeit der Rohre an den Gabelzinken ist Gegenstand des Anspruchs 2, wobei die kreisbogenförmige Ausnehmung eine satte Anlage der Rohrenden an den Gabelzinken ermöglicht.

Eine weitere einfache Verbindung zwischen Rohr und Gabelzinken ist auch durch das Merkmal des Anspruchs 3 gewährleistet, wonach das mit einem Halteboden versehene dünnwandige Rohr einfach stumpf auf das Ende der Gabelzinken aufgesetzt und hiermit verlötet oder verschweißt wird. Damit die Gasströmung in den dünnwandigen Rohren aufrechterhalten bleibt, ist hier im Bereich des Haltebodens eine Ausströmöffnung vorgesehen.

Durch die Beschichtung der dünnwandigen Rohre und der Gabelzinken mit einem gasresistenten Kunststoff entsprechend dem Merkmal des Anspruchs 4 kommen die Gasmoleküle nicht mehr mit der Metalloberfläche der schwingenden Teile in Berührung, so daß der sonst bei bestimmten Gasgemischen auftretende Plusfehler vermieden wird, der durch An- oder Einlagerungen von Gasmolekülen an der metallischen Oberfläche der Stimmgabel entstehen konnte. Die Kunststoffschicht hat nämlich eine wesentlich geringere Affinität zu den Gasmolekülen als die darunter befindliche Metalloberfläche, so daß solche die schwingende Masse vergrößernden An- oder Einlagerungen von Gasmolekülen unterdrückt werden.

Der gleiche Effekt läßt sich auch dadurch erzielen, daß gemäß dem Anspuch 5 die dünnwandigen Rohre ganz aus einem gasresistenten Kunststoff, insbesondere aus Tetraflourethylen gefertigt sind.

Der Dichtemesser gemäß der Erfindung ist in mehreren Ausführungsbeispielen in der Zeichnung dargestellt, und zwar zeigen:

Fig. 1 den Dichtemesser mit Stimmgabel im Längsschnitt,

Fig. 2 einen Querschnitt durch den Dichtemesser nach Linie II-II der Fig. 1,

Fig. 3 eine andere Verbindung zwischen Rohr und Gabelzinken,

Fig. 4 eine weitere Möglichkeit für diese Verbindung und

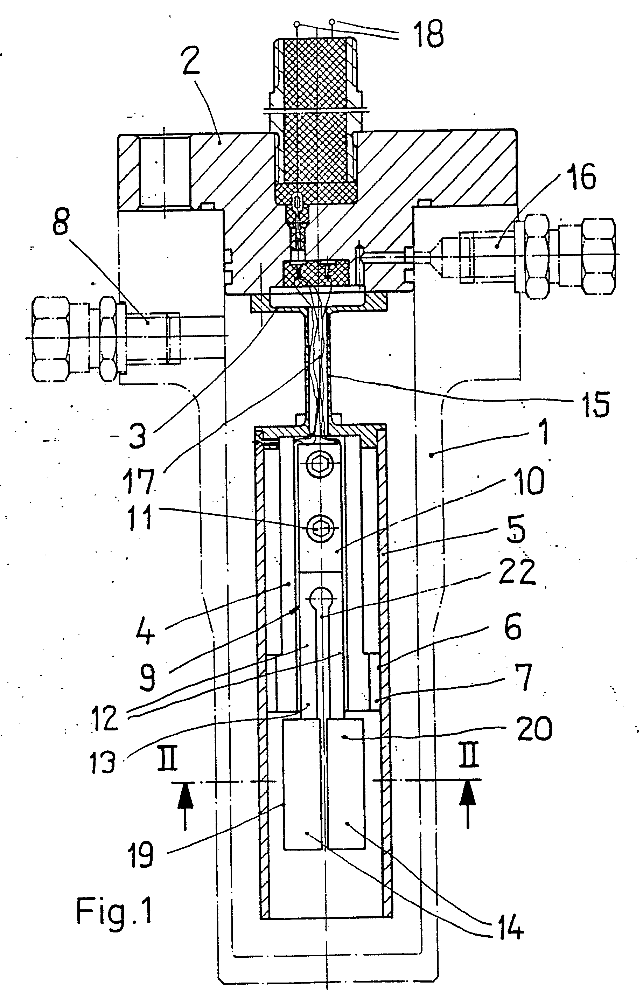

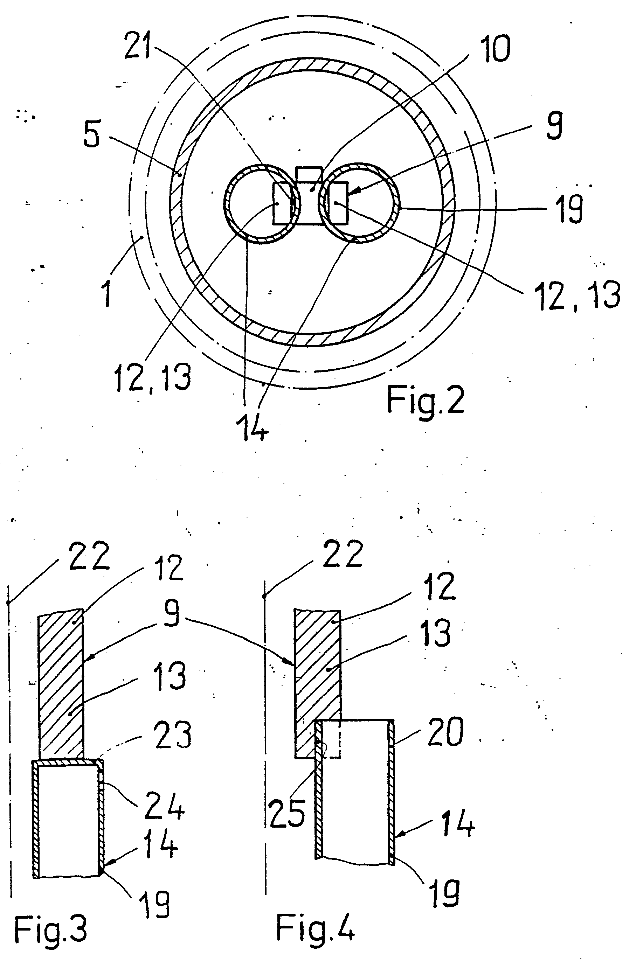

Der in den Fig. 1 und 2 dargestellte Dichtemesser besteht aus dem strichpunktiert angedeuteten Gehäuse 1 mit dem Gehäusedeckel 2, an dem über den Dämpfer 3 schwingungsentkoppelt der Gabelträger 4 sitzt. Am Dämpfer 3 ist außerdem das Umlenkrohr 5 zentrisch gehalten, das auch noch an den kreisbogenförmigen Außenflächen 6 der beiden Erweiterungen 7 des Gabelträgers 4 geführt ist. Das Gas tritt über den Eintritt 8 in das Gehäuse 1 ein, strömt außerhalb des Umlenkrohres 5 nach unten und dann von unten in das Umlenkrohr 5. An dem Gabelträger 4 ist als Schwingkörper die Stimmgabel 9 mit ihrem Stimmgabelfuß 10 über die Schrauben 11 befestigt. Die Stimmgabel 9 trägt die beiden Stimmgabelzinken 12, die an ihren Enden 13 mit den dünnwandigen Rohren 14 versehen sind. Das in dem Umlenkrohr 5 aufströmende Gas umströmt und durchströmt die beiden dünnwandigen Rohre 14 und strömt dann über die Gabelzinken 12 der Stimmgabel 9 weiter durch das Innere des Rohres 15 des Dämpfers 3. Von hier aus erfolgt die Abströmung nach oben zum Auslaß 16.

Die dünnwandigen Rohre 14 und die Gabelzinken 12 der Stimmgabel 9 werden durch Induktionsspulen, die in den beiden Erweiterungen 7 des Gabelträgers 4 fest eingebaut sind, zur Schwingung angeregt, wobei die Frequenz der Schwingungen von der Dichte des Gases abhängig ist. Die jeweiligen, der Dichte des zu bestimmenden Gases entsprechenden Meßwerte für die Anzeige der Frequenz werden über die Elektroleitungen 17 und die Anschlüsse 18 nach außen übertragen, die auch gleichzeitig die Erregerspannung für die Induktionsspulen liefern.

Die in den Fig. 1 und 2 gezeigten beiden dünnwandigen und beiderseits offenen Rohre 14 besitzen einen geschlossenen Rohrmantel 19, dessen Endabschnitt 20 auf die Enden 13 der Gabelzinken 12 aufgeschoben ist. Die Rohre 14 sind hierbei soweit nach außen verlagert, daß ihr Innenmantelabschnitt 21 an den Kanten des zugehörigen Gabelzinken 12 anliegt. Durch Verlöten oder Verschweißen dieser Berührungskanten mit dem Innnenmantelabschnitt 21 ist die feste Verbindung zwischen Gabelzinken 12 und Rohr 14 hergestellt.

Bei der in Fig. 3 gezeigten Verbindung zwischen dem auf der einen Seite der Stimmgabelachse 22 liegenden Gabelzinken 12 und dem dünnwandigen Rohr 14 ist das Rohr an dem Verbindungsende mit einem Halteboden 23 versehen und mit diesem Halteboden stumpf auf das Ende 13 des Gabelzinkens 12 aufgesetzt und hiermit verlötet oder verschweißt. Damit das zu bestimmende Gas innen durch das dünnwandige Rohr 14 strömen kann, ist oben am Rohr eine Ausströmöffnung 24 vorgesehen.

Bei der Verbindung nach der Fig. 4 ist das Ende 13 des Gabelzinkens 12 mit einer kreisbogenförmigen Ausnehmung 25 versehen, in die das dünnwandige runde Rohr 14 mit seinem Endabschnitt 20 passend eingelegt und mit dem Gabelzinken 12 verlötet oder verschweißt ist.

**Patentansprüche**

1. Dichtemesser für Gase mit einer dem Gas ausgesetzten Stimmgabel (9) als Schwingkörper, die als Teil eines phasengekoppelten elektromagnetischen Schwingungssystems einerseits in einer ihrer Eigenfrequenzen angeregt und andererseits in dieser Eigenfrequenz, die sich mit unterschiedlicher Dichte der Gase ändert, erfaßt wird, wobei die beiden Enden (13) der Stimmgabelzinken (12) einen die Oberfläche vergrößernden und dadurch die Wechselwirkung der Massenkräfte erhöhenden Prallkörper tragen, dadurch gekennzeichnet, daß auf die beiden Enden (13) der Gabelzinken (12) der Stimmgabel (9) jeweils ein axial zu den Gabelzinken (12) verlaufendes und an beiden Endabschnitten offenes dünnwandiges Rohr (14) mit einem Endabschnitt (20) aufgesetzt und mit dem zugehörigen Gabelzinken (12) durch Schweißen, Löten oder dergl. fest verbunden ist.

2. Dichtemesser nach Anspruch 1, <u>dadurch gekennzeichnet</u>, daß die beiden Enden (13) der Gabelzinken (12) der Stimmgabel (9) mit einer kreisbogenförmigen Ausnehmung (25) versehen sind, in die das dünnwandige runde Rohr (14) mit seinem Endabschnitt (20) passend eingelegt und mit dem zugehörigen Gabelzinken durch Schweißen, Löten oder dergl. fest verbunden ist.

3. Dichtemesser nach Anspruch 1, <u>dadurch gekennzeichnet</u>, daß das mit einem Halteboden (23) an dem Verbindungsende versehene dünnwandige Rohr (74) in axialer Richtung stumpf auf das Ende (13) des zugehörigen Gabelzinkens (12) aufgesetzt und durch Schweißen, Löten oder dergl. fest hiermit verbunden ist, wobei das Rohr (14) im Bereich des Haltbodens (23) mit einer Ausströmöffnung (24) versehen ist.

4. Dichtemesser nach einem oder mehreren der Ansprüche 1 bis 3, <u>dadurch gekennzeichnet</u>, daß die beiden dünnwandigen Rohre (14) innen und außen sowie mindestens die mitschwingenden Gabelzinken (12) der Stimmgabel (9) mit einer dünnen Haut aus einem gasresistenten Kunststoff beschichtet sind.

5. Dichtemesser nach einem oder mehreren der Ansprüche bis 4, <u>dadurch gekennzeichnet</u>, daß die dünnwandigen Rohre (14) ganz aus einem gasresistenten Kunststoff, insbesondere aus Tetraflourethylen gefertigt sind.

## Claims

1. Density meter for gases comprising a tuning fork (9) exposed to the gases and acting as an oscillator element which as a part of a phase-coupled electromagnetic oscillatory system is energised into one of its natural frequencies on the one hand and on the other hand is detected in this natural frequency, which varies with different gas density, the two extremities (13) of the tuning fork prongs (12) carrying an impingement element increasing the surface and thereby enhancing the reciprocal action of the inertial forces, characterised in that a tube (14), extending axially with respect to the prongs (12), open at both terminal sections and of thin gauge, is seated with its terminal portion (20) on each of the two extremities (13) of the prongs (12) of the tuning fork (9), and firmly joined to the corresponding fork prong (12) by welding, brazing or the like.

2. Density meter according to claim 1, characterised in that the two extremities (13) of the fork tines (12) of the tuning fork (9) are provided with an arcuate recess (25) in which the thin-walled round tube (14) has its terminal portion (20) engaged in a fitted manner and is firmly joined to the corresponding fork prongs by welding, brazing or the like.

3. Density meter according to claim 1, characterised in that the thin-walled tube (14) provided with a securing base (23) at the connecting extremity is placed in abutment in the axial direction on the extremity (13) of the corresponding fork tine (12) and is firmly joined thereto by welding, brazing or the like, the tube (14) being provided with an outflow aperture (24) in the vicinity of the securing base (23).

4. Density meter according to one or more of the claims 1 to 3, characterised in that the two thin-walled tubes (14) are coated internally and externally, as are at least the co-vibrating fork prongs (12) of the tuning fork (9), with a thin skin of a gas-resistant plastics material.

5. Density meter according to one or more of the claims 1 to 4, characterised in that the thin-walled tubes (14) are integrally produced from a gas-resistant plastics material, in particular from tetrafluoro ethylene.

## Revendications

1. Densimètre pour gaz, comportant, comme organe oscillant, un diapason (9) exposé au gaz, qui, en tant que partie d'un système oscillant électromagnétique couplé en phase, d'une part, est excité dans l'une de ses fréquences propres et, d'autre part, fait l'objet d'une détection de cette fréquence propre qui varie en fonction des différentes densités des gaz, et dans lequel les deux extrémités (13) des branches (12) du diapason portent un organe de déviation qui en augmente la surface et, par conséquent, amplifie l'interaction des forces dues à la masse, caractérisé en ce que, sur chacune des deux extrémités (13) des branches (12) du diapason (9), est monté, par une partie d'extrémité (20), un tube à paroi mince (14) s'étendant axialement par rapport aux branches (12) et ouvert au niveau de ses deux parties d'extrémités, tube qui est solidarisé à la branche correspondante (12) par soudage, brasage ou un procédé analogue.

2. Densimètre selon la revendication 1, caractérisé en ce que les deux extrémités (13) des branches (12) du diapason (9) sont pourvues d'un évidement en forme d'arc de cercle (25), dans lequel le tube rond à paroi mince (14) est emboîté étroitement par sa partie d'extrémité (20) et est solidarisé à la branche correspondante par soudage, brasage ou un procédé analogue.

3. Densimètre selon la revendication 1, caractérisé en ce que le tube à paroi mince (14), comportant un fond d'appui (23) au niveau de son extrémité d'assemblage, est monté bout à bout dans la direction axiale sur l'extrémité (13) de la branche correspondante (12) et est solidarisé à celle-ci par soudage, brasage ou un procédé analogue, le tube (14) étant pourvu, au voisinage du fond d'appui (23), d'un orifice d'évacuation (24).

4. Densimètre selon une ou plusieurs des revendications 1 à 3, caractérisé en ce que les deux tubes à paroi mince (14), à l'intérieur comme à l'extérieur, de même qu'au moins les branches oscillant conjointement (12) du diapason (9) sont revêtus d'une mince pellicule en une matière synthétique résistante aux gaz.

5. Densimètre selon une ou plusieurs des revendications 1 à 4, caractérisé en ce que les tubes à paroi mince (14) sont entièrement fabriqués à partir d'une matière synthétique résistante aux gaz, en particulier à partir de tétrafluoréthylène.

0 102 490

Fig.1

Fig.2

Fig.3

Fig.4